# EUROPÄISCHE PATENTSCHRIFT

(11) **EP 3 676 079 B1**
(45) Veröffentlichungstag und Bekanntmachung des Hinweises auf die Patenterteilung: **17.02.2021**
(21) Anmeldenummer: 18785868.3
(22) Anmeldetag: 28.09.2018
(51) Int. Cl.: B29C 65/10, B29C 65/20, B29K 23/00, B29K 27/06

(54) **KONTAKTSCHWEISSHEIZKOMPONENTE UND SCHWEISSAUTOMAT**
HEATING COMPONENT FOR CONTACT WELDING AND AUTOMATIC WELDING MACHINE
COMPOSANT CHAUFFANT DE SOUDAGE PAR CONTACT ET AUTOMATE DE SOUDAGE

(30) Priorität: 06.10.2017 DE 202017106063 U
(43) Veröffentlichungstag der Anmeldung: 08.07.2020
(73) Patentinhaber: Leister Technologies AG, 6056 Kägiswil (CH)
(72) Erfinder: RÖTHLIN, Paul, 6064 Kerns (CH); BÜRGLER, Roger, 6373 Ennetbürgen (CH)
(74) Vertreter: Klocke, Peter
(86) Internationale Anmeldenummer: PCT/EP2018/076420
(87) Internationale Veröffentlichungsnummer: WO 2019/068574

(56) Entgegenhaltungen:
- EP-A1- 1 254 758
- EP-A1- 1 358 993
- EP-A1- 1 884 347
- EP-A2- 0 914 935
- EP-A2- 1 254 759
- WO-A1-2006/117397
- CN-Y- 201 175 996

## Beschreibung

Die Erfindung betrifft eine Kontaktschweißheizkomponente zum randseitigen Plastifizieren von zumindest teilweise überlappend angeordneten thermisch an-/ aufschmelzbaren Materialbahnen, die zwischen einer überlappten unteren Materialbahn und einer überlappenden oberen Materialbahn einführbar und an diesen entlang bewegbar ist, mit einer Heizkomponentenoberseite zum Kontaktieren der oberen Materialbahn und einer Heizkomponentenunterseite zum Kontaktieren der unteren Materialbahn, mit einer in der Bewegungsrichtung der Kontaktschweißheizkomponente beim Schweißvorgang vorderen Heizkomponentenmaterialanlaufseite und einer hinteren Heizkomponentenmaterialablaufkante für die Materialbahnen, die über die Heizkomponentenoberseite und die Heizkomponentenunterseite unter Bildung einer keilförmigen Kontur miteinander verbunden sind, und mit mindestens einer über die Heizkomponentenoberseite und/oder die Heizkomponentenunterseite hervorstehenden Aufraueinrichtung für die Materialbahnen, die in der Bewegungsrichtung der Kontaktschweißheizkomponente vor der Heizkomponentenmaterialablaufkante angeordnet ist und sich angrenzend an die Heizkomponentenmaterialablaufkante quer zu der Bewegungsrichtung der Kontaktschweißheizkomponente erstreckt und eine Anzahl in Bewegungsrichtung der Kontaktschweißheizkomponente verlaufende scharfkantig ausgebildete erhabene Aufrauelemente aufweist.

Die Erfindung betrifft zudem einen Schweißautomaten zum randseitigen Verbinden von zumindest teilweise überlappend angeordneten thermisch an-/aufschmelzbaren Materialbahnen, mit einer Kontaktschweißheizkomponente, die zum Plastifizieren zwischen einer überlappten unteren Materialbahn und einer überlappenden oberen Materialbahn einführbar und an diesen entlang bewegbar ist.

Derartige Kontaktschweißheizkomponenten sind allgemein bekannt und werden entweder als Heißluftschlitzschweißdüse für ein Heißluft-Schweißgerät oder als ein Heizkeilelement mit einer elektrischen Beheizung für sogenannte Elektroheizkeil-Schweißgeräte sowie als Heizelementkombinationen daraus ausgebildet. Bei den Heißluft-Schweißgeräten wird ein Luftstrom beispielsweise durch ein elektrisches Heizelement oder eine Gasflamme erhitzt und die so erzeugte Heißluft mittels einer besonders ausgestalteten Schweißdüse auf das zu verschweißende Material gerichtet, wobei die Schweißdüse in der Regel als keilförmige Schlitzschweißdüse ausgebildet ist. Bei den Elektroheizkeil-Schweißgeräten erfolgt die Erwärmung des Elektroheizkeilelementes zum Verschweißen des Materials elektrisch, wobei der Heizkeil direkt bestromt, von einer eingesetzten elektrischen Heizpatrone oder indirekt mittels Induktion erhitzt wird. Bei diesen beiden Arten von Kontaktschweißheizkomponenten wird die Kontaktschweißheizkomponente erwärmt, wobei deren Heizkomponentenoberseite und Heizkomponentenunterseite beim Schweißvorgang die obere bzw. untere Materialbahn zur Erwärmung der Materialbahnen kontaktiert. Der eigentliche Schweißvorgang erfolgt sowohl bei dem Heißluft-Schweißgerät wie auch bei dem Elektroheizkeil-Schweißgerät nach dem randseitigen An-/Aufschmelzen, d.h. Plastifizieren der Materialbahnen, durch Zusammenpressen der Materialbahnen.

Bei dem Verschweißen von Kunststoffbahnen und -folien wird die jeweilige erhitzte Kontaktschweißheizkomponente zwischen den beiden zu verschweißenden Folien randseitig an diesen entlang bewegt, wobei das Material bei einem Elektroheizschweißkeil allein durch den Kontakt mit der Heizkomponentenoberseite und der Heizkomponentenunterseite und im Falle einer Heißluftschlitzschweißdüse zusätzlich durch die aus der Düse austretende Heißluft erwärmt wird. In dem überlappenden Bereich des Materials, in dem das Heizelement geführt wird, werden für den Schweißvorgang zunächst das obere Material als auch das untere Material an der Oberfläche plastifiziert und dann mittels einer nachfolgenden Anpresswalze oder -rollen miteinander stoffschlüssig verbunden bzw. verschweißt.

Beim Verschweißen von verschmutzten oder beschichteten Materialbahnen ist die Qualität der erzeugten Schweißnaht oft nicht zufriedenstellend. Diesbezüglich ist es bekannt, dass eine bessere Verschweißung erreicht werden kann, wenn die Materialbahnen und -folien, vor dem Verschweißen aufgeraut werden. Hierzu wird beispielhaft auf die Druckschriften EP 1 254 759 B1, EP 0 914 935 B1 und EP 1 358 993 B1 verwiesen.

Die EP 1 254 759 B1 offenbart eine Heißluftschlitzschweißdüse zum Schweißen von Kunststoffbahnen oder -folien mittels eines Heißluft-Schweißgeräts, mit einer Oberseite und einer Unterseite zur Kontaktierung der oberen bzw. unteren miteinander zu verschweißenden Kunststoffbahn oder -folie, sowie mit aus der Oberfläche der Ober - und Unterseite hervorstehenden Schleifeinrichtungen und mit Luftöffnungen in mindestens einer Oberfläche, wobei aus den Oberflächen hervorstehenden Schleifeinrichtungen quer zur Schweißrichtung angeordnete Erhebungen aufweist, am Rand der Luftöffnungen und in Schweißrichtung vor den Luftöffnungen angeordnet sind. Die Ober- und/oder die Unterseite sind dabei keilförmig ausgebildet, wobei zwischen der Oberseite und der Unterseite vorzugsweise zusätzlich eine elektrische Heizung angeordnet ist.

Die EP 0 914 935 B1 schlägt eine Heißluft-Schweißvorrichtung zum Verschweißen von Kunststoffbahnen vor, mit einer für die Ausgabe der Heißluft vorgesehenen eine schlitzartige Öffnung aufweisenden Düse, vorgesehen um die Heißluft zwischen zwei zu verschweißende Materialbahnen einzublasen, wobei der schlitzartigen Öffnung vorgelagert bzw. dieser in Bearbeitungsrichtung nachgeschaltet mindestens eine rollen- oder walzenartige Schleifeinrichtung vorgesehen ist, um die zu verschweißenden Oberflächen der Materialbahnen vor dem Zusammenpressen anzuschleifen oder aufzurauen. Die Schleifeinrichtung ist an einem seitlich von der schlitzartigen Düse vorstehenden Halteorgan lösbar angeordnet. Dabei verläuft die von der Düse entferntere vordere Kante der Schleifeinrichtung parallel zur von oben gesehenen Düsenöffnungskontur, wobei im Bereich der Düsenöffnung nach oben und/oder nach unten vorstehende Leit- oder Schleifbleche angeordnet sind, entlang welcher die zu verschweißenden Bahnen vor dem Schweißen entlanggeführt werden bzw. entlangschleifen. Zudem sind federartige Lamellen vorhanden, die von der schlitzartigen Düsenöffnung nach unten bzw. nach oben vorstehen und die derart nebeneinander angeordnet sind, dass sie sich jeder Kontur der anzuschleifenden Oberfläche anpassen.

Die EP 1 358 993 B1 lehrt eine Heißluft-Schweißvorrichtung zum Verschweißen von Kunststoffbahnen, mit einer für die Ausgabe der Heißluft vorgesehenen und eine schlitzartige Öffnung aufweisenden Düse, um die Heißluft zwischen zwei zu verschweißende Materialbahnen einzublasen, wobei der schlitzartigen Öffnung vorgelagert bzw. dieser in Bearbeitungsrichtung nachgeschaltet mindestens eine rollen- oder walzenartige Schleifeinrichtung vorgesehen ist, welche kegelförmig bzw. sich konisch verjüngend ausgebildet ist. Die Schleifeinrichtung ist an einem seitlich von der schlitzartigen Düse vorstehenden Halteorgan lösbar angeordnet. Dabei verläuft die von der Düse entferntere vordere Kante der Schleifeinrichtung weitgehend parallel oder leicht angewinkelt zur von oben gesehenen Düsenöffnungskontur.

Aus der EP 1 884 347 A1 und EP 1 254 759 A2 ist eine Vorrichtung zum Verschweißen von Kunststoffbahnen bekannt, die einen Düsenvorsatz umfasst, der einen Schleifkörper aufweist. Der Düsenvorsatz ist beweglich gehalten, wodurch immer eine definierte Kraft auf der unteren zu verspeisenden Bahn liegt und eine konstant gute Nahtqualität entsteht.

WO 2006/117397 A1 beschreibt ebenfalls einen Düsenvorsatz für eine Vorrichtung zum Warmgasschweißen von Kunststoffbahnen, der mehrere, einen Schleifkörper bildende Schleifkörperelemente aufweist. Die Schleifkörperelemente sind auf einer Lagerachse gehalten, wobei die Einzelschleifkörperelemente radial gegeneinander versetzbar sind.

Die CN201175996Y offenbart eine Heißluftdüse mit Öffnungen auf der Oberseite, wobei eine Platte mit Hebungen fluchtend mit den Öffnungen aufgebracht werden kann, um die Materialien aufzurauen.

In der EP 1 254 758 A1 wird eine Heißluftdüse offenbart, die dreieckförmig ausgebildet ist, und sowohl auf der Oberseite als auch auf der Unterseite Erhebungen aufweist, die vorzugsweise scharfkantig sind, um ein Aufrauen der Materialien im Bereich der Überlappung zu ermöglichen.

Die DE 88 08 693 U1 beschreibt eine Schweißvorrichtung mit einem Heizkeil, der in Schweißrichtung verlaufende Profilrillen aufweist, die im Querschnitt rund oder abgerundet sind.

Aus der DE 93 17 104 U1 ist eine Vorrichtung zum Verschweißen von Folienrändern beschrieben, die eine Kontaktschweißheizkomponente der eingangs beschriebenen Art offenbart.

Es hat sich gezeigt, dass mit dem vorstehend aufgeführten Stand der Technik bei schlecht schweißbaren Materialbahnen, z.B. beim Fügen von alten mit neuen Dichtungsbahnen oder beschichteten Dichtungsbahnen mit einer nicht-schweißbaren Beschichtung, keine optimale Verschweißung erreicht werden kann, da die zu verbindenden Materialbahnen vor dem Verschweißen nur geringfügig fein aufgeraut werden.

Davon ausgehend liegt der Erfindung die Aufgabe zugrunde, eine Möglichkeit vorzuschlagen, die auch bei schlecht schweißbaren Materialbahnen zu einer verbesserten Schweißqualität führt und so eine strapazierfähige, langlebige, vorzugsweise dauerhafte stoffschlüssige Verbindung zwischen den Materialbahnen garantiert, d.h. deren zuverlässige homogene Fügung ermöglicht.

Diese Aufgabe wird erfindungsgemäß mit einem einer Kontaktschweißheizkomponente mit den Merkmalen des unabhängigen Anspruchs 1 sowie durch einen Schweißautomaten mit den Merkmalen des nebengeordneten Anspruchs 14 gelöst. Weiter vorteilhafte Ausführungsformen sind den rückbezogenen Ansprüchen zu entnehmen.

Kerngedanke der Erfindung ist es, die Heizkomponentenoberseite zum Kontaktieren der oberen Materialbahn und/oder die Heizkomponentenunterseite zum Kontaktieren der unteren Materialbahn mit einem rillenartigen Flächenbereich nahe der hinteren Heizkomponentenmaterialablaufkante für die Materialbahnen der Kontaktschweißheizkomponente zu versehen. Der rillenartige Flächenbereich soll dabei einer Schrauben-Gewindefläche ähneln, d.h. eine Fläche mit profilierten Einkerbungen und scharfkantigen schneidenartig ausgeführten Erhöhungen bilden, die geradlinig ausgerichtet in der Bewegungsrichtung der Kontaktschweißheizkomponente bzw. des Schweißautomaten verlaufen. Beim Verschweißen der Materialbahnen werden die zwei randseitigen erhitzten Verbindungsbereiche der Materialbahnen vor dem Zusammenpressen der Ränder der Materialbahnen durch die Schneiden vorzugsweise seitlich versetzt zueinander vielfach eingekerbt, wodurch die Kontaktflächen der Verbindungsbereiche zum einen vergrößert und zum anderen weg von der Oberfläche der Materialbahnen in das Innere der Materialbahnen verlagert werden. So entstehen dabei verzahnte Kontaktflächen für den stoffschlüssigen Verbindungsvorgang durch Schweißen, die größer sind als die ursprünglichen ebenen Kontaktflächen. Beim Zusammenfügen der Verbindungsbereiche der Materialbahnen durch eine Anpresswalze oder Anpressrollen entsteht keine zweidimensionale sondern eine dreidimensionale Verbindungsnaht. Durch die Verzahnung können die beiden Materialbahnen bei gleicher von außen sichtbarer Schweißnahtbreite innen über eine deutlich breitere innere Verbindungsnaht miteinander sicher verbunden werden, wodurch gleichzeitig auch die Schweißqualität bei Materialbahnen mit schlecht schweißbarer Oberfläche wesentlich verbessert wird. Die wirksame innere Verbindungsfläche der Materialbahnen ist abhängig von der Tiefe und der Anzahl der vorgenommenen Einkerbungen. Diese verzahnte Verbindungsfläche kann so problemlos bis zu 50 Prozent und mehr gegenüber einer ebenen Verbindungsfläche vergrößert werden.

Bei der erfindungsgemäßen Kontaktschweißheizkomponente, die zum randseitigen Plastifizieren von zumindest teilweise überlappend angeordneten an-/aufschmelzbaren Materialbahnen vorgesehen ist, erstreckt sich die Aufraueinrichtung angrenzend an die Heizkomponentenmaterialablaufkante quer zu der Bewegungsrichtung der Kontaktschweißheizkomponente und weist eine Anzahl in Bewegungsrichtung der Kontaktschweißheizkomponente beim Schweißvorgang verlaufende scharfkantig ausgebildete erhabene, d.h. erhöhte Aufrauelemente auf. Die Aufrauelemente müssen nicht messerscharf sein. Wichtig ist primär, dass sie so dimensioniert sind, dass sie unter Druckbeaufschlagung ins Material eindringen können, also z.B. deren Breite im Vergleich zur Breite der Kontaktschweißheizkomponente klein ist. Dabei können die Aufrauelemente parallel zu der Bewegungsrichtung oder aber auch um einen kleinen Winkel von bis zu etwa 30 Grad zur Bewegungsrichtung geneigt sein.

Die Kontaktschweißheizkomponente weist einen Körper auf, der keilförmig ausgebildet ist, wobei vorzugsweise am Körper die Heizkomponentenoberseite zumindest einen absteigenden Bereich aufweist, über den die obere Materialbahn kontaktierend bewegt wird. Idealerweise weist die Heizkomponentenoberseite am Körper zudem einen ansteigenden Bereich auf, der dem absteigenden Bereich in der üblichen Bewegungsrichtung der Kontaktschweißheizkomponente, vorgelagert angeordnet ist. Dadurch wird die obere Materialbahn insbesondere in Verbindung der nachlaufenden Anpresswalze oder bzw. den nachlaufenden Anpressrollen deutlich gespannt. Damit wird eine verstärkte Aufrauung der Materialbahn auf der Unterseite bewirkt, insbesondere erst eine tiefe Einkerbung durch die in Bewegungsrichtung der Kontaktschweißheizkomponente verlaufenden scharfkantig ausgebildeten erhabenen Aufrauelemente der Aufraueinrichtung ermöglicht. Es hat sich als besonders günstig erwiesen, die Heizkomponentenunterseite, entlang der die untere Materialbahn kontaktierend bewegt wird, ähnlich der Heizkomponentenoberseite auszubilden, um dort die entsprechenden Vorteile zu erreichen. Die Aufraueinrichtung und die Aufrauelemente überragen den Körper der Kontaktschweißheizkomponente.

Die Aufraueinrichtung und die Aufrauelemente weisen in der Bewegungsrichtung der Kontaktschweißheizkomponente eine sich verändernde Höhe auf, d.h. diese stehen in der Höhe unterschiedlich weit von der Heizkomponentenoberseite und/oder der Heizkomponentenunterseite ab. Dabei sind die Aufraueinrichtung und die Aufrauelemente günstigerweise ebenfalls keilförmig ausgeführt, d.h. sie umfassen einen ansteigenden Bereich und einen absteigenden Bereich, wobei der ansteigende Bereich in der üblichen Bewegungsrichtung der Kontaktschweißheizkomponente vor dem absteigenden Bereich angeordnet ist. Dies bewirkt, dass die Materialbahnen gleitend entlang den scharfkantigen klingenförmigen Aufrauelementen ohne Schleifwirkung geführt werden, und sich die Aufrauung der Materialbahnen bedingt durch die Verstärkung der Spannung der Materialbahnen im Wesentlichen auf ein Einritzen und ein Einkerben der Oberfläche beschränkt.

Bei einer bevorzugten Ausführungsform der Erfindung weisen die Aufraueinrichtung und die Aufrauelemente in Richtung der Heizkomponentenmaterialablaufkante eine maximale Höhe auf. Dies bedeutet, dass deren ansteigender Bereich bedeutend länger ist als deren absteigender Bereich. Somit beaufschlagen die Aufrauelemente die plastifizierten Ränder der jeweils zugeordneten Materialbahn mit der gewünschten Ritz- bzw. Kerbwirkung über einen großen Bereich der Aufraueinrichtung. Bei einer vorteilhaften Ausführungsform der erfindungsgemäßen Kontaktschweißheizkomponente weisen die Aufraueinrichtung und die Aufrauelemente in der Bewegungsrichtung der Kontaktschweißheizkomponente einen bogenförmigen Verlauf auf.

Bei einer begünstigten Ausführungsform der Erfindung sind die Aufraueinrichtung und die Aufrauelemente in der Bewegungsrichtung der Kontaktschweißheizkomponente unterbrochen ausgebildet sind. Damit weist die Aufraueinrichtung in der angegebenen Richtung gesehen nicht nur eine Anzahl von quer zu der Bewegungsrichtung der Kontaktschweißheizkomponente nebeneinander angeordnete scharfkantige Aufrauelemente auf, sondern zudem auch eine Anzahl in der Bewegungsrichtung der Kontaktschweißheizkomponente hintereinander angeordnete scharfkantige Aufrauelemente. Die nebeneinander und/oder hintereinander ausgebildeten Aufrauelemente können zumindest teilweise fluchtend miteinander oder seitlich versetzt zueinander angeordnet sein.

Bei einer besonders vorteilhaften Variante der erfindungsgemäßen Kontaktschweißheizkomponente sind die Aufraueinrichtung und die Aufrauelemente orthogonal zu der Bewegungsrichtung der Kontaktschweißheizkomponente unterbrochen ausgebildet und weisen vorzugsweise orthogonal zu der Bewegungsrichtung der Kontaktschweißheizkomponente eine sich verändernde Höhe auf. Als besonders zweckmäßig ist eine Ausführungsform, bei der die Höhe der Aufraueinrichtung und der Aufrauelemente orthogonal zu der Bewegungsrichtung der Kontaktschweißheizkomponente von außen nach innen abnimmt.

Bei einer Ausgestaltung der Erfindung besteht die erfindungsgemäße Kontaktschweißheizkomponente aus Metall und ist ganz oder teilweise mittels eines 3D-Metalldruckverfahrens hergestellt. Bei einer anderen Ausführungsform der Erfindung ist die Kontaktschweißheizkomponente ganz oder teilweise mittels eines Lasersinter- und/oder Laserschmelzverfahrens hergestellt. Vorzugsweise weist die Kontaktschweißheizkomponente innen zwischen der Heizkomponentenoberseite und der Heizkomponentenunterseite eine Stützverstrebung zur Erhöhung der Druckfestigkeit auf. Bei der Kontaktschweißheizkomponente handelt es sich bei einer Ausführungsform der Erfindung um eine Heißluftschlitzschweißdüse und bei einer anderen Ausführungsform um einen Elektroheizschweißkeil.

Die erfindungsgemäße Kontaktschweißheizkomponente aus Metall kann generell natürlich auch mittels trennender Fertigungsverfahren wie Fräsen und Schleifen, umformender Fertigungsverfahren wie Biegen und Eindrücken und/oder fügende Fertigungsverfahren wie Schweissen hergestellt werden. Das 3D-Druckverfahren hat als urformendes Verfahren diesen gegenüber den Vorteil, dass durch den höheren Automatisierungsgrad die Genauigkeit bzw. die Wiederholbarkeit besser ist und dass komplexere Geometrien realisierbar sind, z.B. auch die Verstrebungen im Inneren. Ferner hat der 3D-Druck auch teilweise Kostenvorteile.

Eine erfindungsgemäßer Heißluftschlitzschweißdüse weist eine Heißlufteintrittsöffnung, mindestens eine schlitzförmige Schweißluftaustrittsöffnung und wenigstens eine der Schweißluftaustrittsöffnung in einer Bewegungsrichtung der Heißluftschlitzschweißdüse beim Schweißvorgang vorgelagerte Vorwärmluftaustrittsöffnung für einen Heißluftstrahl auf, wobei sich die Aufraueinrichtung angrenzend an die Schweißluftaustrittsöffnung quer zu der Bewegungsrichtung der Heißluftschlitzschweißdüse erstreckt. Idealerweise erstrecken sich die Aufrauelemente bei einer empfehlenswerten Ausgestaltung der Erfindung von der mindestens einen Vorwärmluftaustrittsöffnung bis hin zu der Schweißluftaustrittsöffnung. Die mindestens eine Schweißluftaustrittsöffnung kann eine oder mehrere, nebeneinander und/oder übereinander angeordnete Öffnungen bzw. Kanäle aufweisen.

Ein erfindungsgemäßer Elektroheizschweißkeil ist direkt oder indirekt elektrisch beheizt ist, wobei sich die Aufraueinrichtung angrenzend an die Heizkomponentenmaterialablaufkante quer zu der Bewegungsrichtung des Elektroheizschweißkeils erstreckt.

Der erfindungsgemäße Schweißautomat zum randseitigen Verbinden von zumindest teilweise überlappend angeordneten an-/aufschmelzbaren Materialbahnen, mit einer Kontaktschweißheizkomponente, die zum Plastifizieren der Materialbahnen zwischen einer überlappten unteren Materialbahn und einer überlappenden oberen Materialbahn einführbar und an diesen entlang bewegbar ist, weist eine Kontaktschweißheizkomponente wie vorstehend beschrieben auf.

Kurz zusammengefasst bestehen die Vorteile der Erfindung darin, dass
- eine viel höhere Schweißverbundfläche der zu verbindenden Materialbahnen als bisher möglich erreicht wird,
- Oxidations-Schichten automatisch durch das Aufrauen entfernt oder beseitigt werden,
- eine Nahtvorbereitung verzichtbar wird,
- Wasserdampf bei Erhitzen von Materialbahnen mit hoher Feuchtigkeit besser entweichen kann und somit keine oder nur wenige Blasen in der Schweißfläche gebildet werden,
- bei beschichteten PVC- und TPO-Materialbahnen die Beschichtung aufgeraut oder entfernt wird,
- die maximale Schweißgeschwindigkeit um 10% - 15% gesteigert wird,
- eine geringere Schweißtemperatur ermöglicht wird,
- die Kontaktschweißheizkomponente einfach im 3D-Metalldruckverfahren herstellbar ist,
- sich durch die breitere Schweißverbundfläche der Materialbahnen eine höhere Sicherheit und höhere Toleranz bei der Schweißqualität ergibt,
- eine dauerhafte Dichtigkeit der Schweißnähte gewährleistet wird,
- keine Lösungsmittel zur Nahtvorbehandlung benötigt werden,
- eine Reduzierung der Arbeitszeit erreicht wird, und
- eine Verringerung der Lohn- und Materialkosten bewirkt wird.

Nachfolgend wird die Erfindung anhand in der Zeichnung dargestellten Ausführungsbeispielen näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein.

### Es stellen dar:

- Figur 1: einen erfindungsgemäßen Schweißautomat, der als Heißluftschweißautomat ausgeführt ist und eine erfindungsgemäße Kontaktschweißheizkomponente in Form einer Heißluftschlitzschweißdüse aufweist, in perspektivischer Ansicht;
- Figur 2: eine Ausschnittsvergrößerung aus Figur 1 im Bereich der Heißluftschlitzschweißdüse;
- Figur 3: die Heißluftschlitzschweißdüse aus Figur 2, in perspektivischer Darstellung in Draufsicht von oben;
- Figur 4: die Heißluftschlitzschweißdüse aus Figur 2, in perspektivischer Darstellung in Draufsicht von unten;
- Figur 5: die Heißluftschlitzschweißdüse aus Figur 2, in perspektivischer Darstellung in Seitenansicht;
- Figur 6: eine erfindungsgemäße Kontaktschweißheizkomponente in Form eines Elektroheizschweißkeils, in perspektivischer Darstellung von oben.

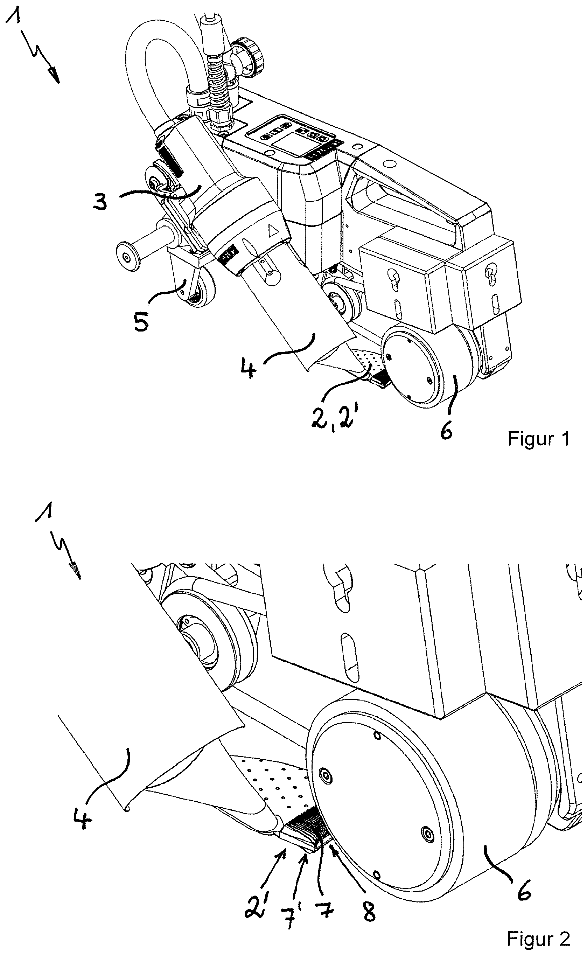

Die Figur 1 veranschaulicht eine erfindungsgemäßen Schweißautomaten 1 zum randseitigen Verbinden von zumindest teilweise überlappend angeordneten thermisch an-/aufschmelzbaren in der Figur nicht gezeigten Materialbahnen, mit einer erfindungsgemäßen Kontaktschweißheizkomponente 2, die zum Plastifizieren der Materialbahnen zwischen der überlappten unteren Materialbahn und der überlappenden oberen Materialbahn einführbar und an diesen entlang bewegbar ist. Bei dem dargestellten Ausführungsbeispiel handelt es sich um einen selbstfahrenden Heißluft-Schweißautomaten 1, mit einem regelbaren Heißluftgebläse 3, an dessen Luftaustrittsrohr 4 die Kontaktschweißheizkomponente 2 endseitig angeordnet ist, wobei die Kontaktschweißheizkomponente 2 als Heißluftschlitzschweißdüse 2' ausgebildet ist. Der Schweißautomat 1 ist von Fahrrollen 5 und einer Anpresswalze 6 getragen.

Die Figur 2 zeigt eine Ausschnittsvergrößerung aus Figur 1 im Bereich der Heißluftschlitzschweißdüse 2'. Die Heißluftschlitzschweißdüse 2' ist zum randseitigen Plastifizieren der nicht dargestellten teilweise überlappend angeordneten an-/aufschmelzbaren Materialbahnen vorgesehen und weist oben und unten eine hervorstehende Aufraueinrichtung 7 bzw. 7' für die Materialbahnen auf, die in der Bewegungsrichtung der Kontaktschweißheizkomponente 2 vor einer Heizkomponentenmaterialablaufkante 8 angeordnet sind. Die Aufraueinrichtungen 7, 7' sind direkt angrenzend an die Heizkomponentenmaterialablaufkante 8 angeordnet und erstrecken sich quer zu der Bewegungsrichtung der Kontaktschweißheizkomponente 2. Sie weisen jeweils eine Anzahl in Bewegungsrichtung der Kontaktschweißheizkomponente 2 verlaufende scharfkantig ausgebildete erhabene Aufrauelemente 9 auf, die beim Plastifizieren der Materialbahnen auf diese einwirken.

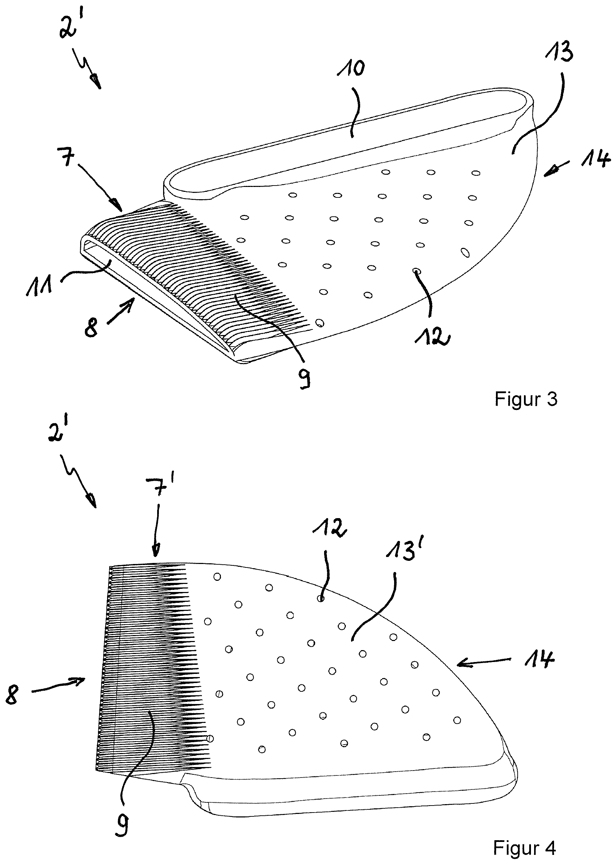

In der Figur 3 ist die Heißluftschlitzschweißdüse 2' aus den Figuren 1, 2 in perspektivischer Darstellung in Draufsicht von oben, in der Figur 4 in perspektivischer Darstellung in Draufsicht von unten, getrennt von dem Heißluftgebläse 3 vergrößert abgebildet. Sie ist an dem Luftaustrittsrohr 4 des Heißluftgebläses 3 lösbar befestigbar und weist eine Heißlufteintrittsöffnung 10, eine schlitzförmige Schweißluftaustrittsöffnung 11 und mehrere der Schweißluftaustrittsöffnung 11 in einer Bewegungsrichtung der Heißluftschlitzschweißdüse 2' beim Schweißvorgang vorgelagerte Vorwärmluftaustrittsöffnungen 12 für einen Heißluftstrahl auf, wobei sich die jeweilige Aufraueinrichtungen 7, 7' angrenzend an die Schweißluftaustrittsöffnung 11 quer zu der Bewegungsrichtung der Heißluftschlitzschweißdüse 2' erstreckt. Die Heißluftschlitzschweißdüse 2' weist eine Heizkomponentenoberseite 13 zum Kontaktieren der oberen Materialbahn und einer Heizkomponentenunterseite 13' zum Kontaktieren der unteren Materialbahn auf, mit einer in der Bewegungsrichtung der Kontaktschweißheizkomponente 2 beim Schweißvorgang vorderen Heizkomponentenmaterialanlaufseite 14, der mit Abstand gegenüberliegend die hintere Heizkomponentenmaterialablaufkante 8 für die Materialbahnen angeordnet ist. Die Heizkomponentenmaterialanlaufseite 14, und die Heizkomponentenmaterialablaufkante 8 sind über die die Heizkomponentenoberseite 13 und die Heizkomponentenunterseite 13' unter Bildung einer keilförmigen Kontur miteinander verbunden.

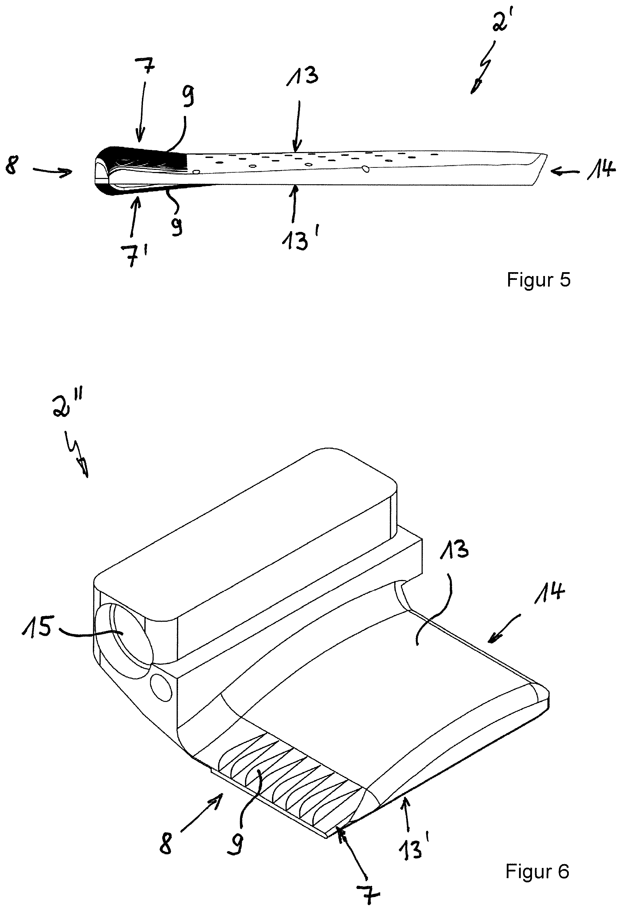

Die Figur 5, die die Heißluftschlitzschweißdüse 2' in perspektivischer Darstellung in Seitenansicht zeigt, verdeutlicht nochmals, dass die Aufraueinrichtungen 7, 7' für die Materialbahnen der Kontaktschweißheizkomponente 2, die in der Bewegungsrichtung der Heißluftschlitzschweißdüse 2' vor der Heizkomponentenmaterialablaufkante 8 angeordnet sind, über die Heizkomponentenoberseite 13 und die Heizkomponentenunterseite 13' deutlich hervorstehen.

Gemäß den Figuren 3 bis 5 sind die Aufraueinrichtungen 7, 7' angrenzend an die Heizkomponentenmaterialablaufkante 8 sich quer zu der Bewegungsrichtung der Kontaktschweißheizkomponente 2 erstreckend angeordnet und weisen jeweils eine Anzahl in Bewegungsrichtung der Kontaktschweißheizkomponente 2 verlaufende scharfkantig ausgebildete erhabene Aufrauelemente 9 auf. Dabei haben die Aufraueinrichtungen 7, 7' und die Aufrauelemente 9 in der Bewegungsrichtung der Kontaktschweißheizkomponente 2 eine sich verändernde Höhe und weisen in Richtung der Heizkomponentenmaterialablaufkante 8 eine maximale Höhe auf. Damit ist die Höhe der Aufrauelemente 9 nahe der Luftaustrittsöffnung 11 der Heißluftschlitzschweißdüse 2' am größten. Insbesondere weisen bei der dargestellten Ausführungsform die Aufraueinrichtungen 7, 7' und die Aufrauelemente 9 in der Bewegungsrichtung der Kontaktschweißheizkomponente 2 einen bogenförmigen Verlauf auf.

Die Figur 6 veranschaulicht eine erfindungsgemäße Kontaktschweißheizkomponente 2 in Form eines Elektroheizschweißkeils 2", in perspektivischer Darstellung von oben. Der Elektroheizschweißkeil 2" ist zum randseitigen Plastifizieren der nicht dargestellten teilweise überlappend angeordneten an-/aufschmelzbaren Materialbahnen vorgesehen und weist oben eine hervorstehende Aufraueinrichtung 7 für die Materialbahnen auf, die in der Bewegungsrichtung der Kontaktschweißheizkomponente 2 vor einer Heizkomponentenmaterialablaufkante 8 der Kontaktschweißheizkomponente 2 angeordnet ist. Die Aufraueinrichtung 7 ist direkt angrenzend an die Heizkomponentenmaterialablaufkante 8 des Elektroheizschweißkeils 2" angeordnet und erstreckt sich quer zu der Bewegungsrichtung der Kontaktschweißheizkomponente 2. Sie weist jeweils eine Anzahl in Bewegungsrichtung der Kontaktschweißheizkomponente 2 verlaufende scharfkantig ausgebildete erhabene Aufrauelemente 9 auf, die beim Plastifizieren der Materialbahnen auf diese einwirken.

Der Elektroheizschweißkeil 2" kann direkt über einen integral ausgebildeten Heizwiderstand oder indirekt über eine darin aufgenommene Heizpatrone temperiert werden. Er weist eine Befestigungseinrichtung 15 zur Befestigung an einem Handschweißgerät oder einem Schweißautomaten auf. Der Elektroheizschweißkeil 2" weist eine Heizkomponentenoberseite 13 zum Kontaktieren der oberen Materialbahn und eine Heizkomponentenunterseite 13' zum Kontaktieren der unteren Materialbahn auf, sowie eine in der Bewegungsrichtung der Kontaktschweißheizkomponente 2 beim Schweißvorgang vorderen Heizkomponentenmaterialanlaufseite 14, der mit Abstand gegenüberliegend die hintere Heizkomponentenmaterialablaufkante 8 für die Materialbahnen angeordnet ist. Die Heizkomponentenmaterialanlaufseite 14 und die Heizkomponentenmaterialablaufkante 8 sind über die die Heizkomponentenoberseite 13 und die Heizkomponentenunterseite 13' unter Bildung einer keilförmigen Kontur miteinander verbunden. Ansonsten sind die Aufraueinrichtung 7 und die Aufrauelemente 9 wie vorstehend bezüglich der Heißluftschlitzschweißdüse 2' beschrieben ausgebildet.

## Patentansprüche

1. Kontaktschweißheizkomponente (2) zum randseitigen Plastifizieren von zumindest teilweise überlappend angeordneten thermisch an-/aufschmelzbaren Materialbahnen, die zwischen einer überlappten unteren Materialbahn und einer überlappenden oberen Materialbahn einführbar und an diesen entlang bewegbar ist, mit einer Heizkomponentenoberseite (13) zum Kontaktieren der oberen Materialbahn und einer Heizkomponentenunterseite (13') zum Kontaktieren der unteren Materialbahn, mit einer in der Bewegungsrichtung der Kontaktschweißheizkomponente (2) beim Schweißvorgang vorderen Heizkomponentenmaterialanlaufseite (14) und einer hinteren Heizkomponentenmaterialablaufkante (8) für die Materialbahnen, die über die Heizkomponentenoberseite (13) und die Heizkomponentenunterseite (13') unter Bildung einer keilförmigen Kontur miteinander verbunden sind, und mit mindestens einer über die Heizkomponentenoberseite (13) und/oder die Heizkomponentenunterseite (13') hervorstehenden Aufraueinrichtung (7, 7') für die Materialbahnen, die in der Bewegungsrichtung der Kontaktschweißheizkomponente (2) vor der Heizkomponentenmaterialablaufkante (8) angeordnet ist und sich angrenzend an die Heizkomponentenmaterialablaufkante (8) quer zu der Bewegungsrichtung der Kontaktschweißheizkomponente (2) erstreckt und eine Anzahl in Bewegungsrichtung der Kontaktschweißheizkomponente (2) verlaufende scharfkantig ausgebildete erhabene Aufrauelemente (9) aufweist, **dadurch gekennzeichnet, dass** die Aufraueinrichtung (7, 7') und die Aufrauelemente (9) in der Bewegungsrichtung der Kontaktschweißheizkomponente (2) eine sich verändernde Höhe aufweisen.

2. Kontaktschweißheizkomponente nach Anspruch 1, **dadurch gekennzeichnet, dass** die Aufraueinrichtung (7, 7') und die Aufrauelemente (9) in Richtung der Heizkomponentenmaterialablaufkante (8) eine maximale Höhe aufweisen.

3. Kontaktschweißheizkomponente nach einem der vorstehenden Ansprüche, **dadurch gekennzeichnet, dass** die Aufraueinrichtung (7, 7') und die Aufrauelemente (9) in der Bewegungsrichtung der Kontaktschweißheizkomponente (2) einen bogenförmigen Verlaufaufweisen.

4. Kontaktschweißheizkomponente nach einem der vorstehenden Ansprüche, **dadurch gekennzeichnet, dass** die Aufraueinrichtung (7, 7') und die Aufrauelemente (9) in der Bewegungsrichtung der Kontaktschweißheizkomponente (2) unterbrochen ausgebildet sind.

5. Kontaktschweißheizkomponente nach einem der vorstehenden Ansprüche, **dadurch gekennzeichnet, dass** die Aufraueinrichtung (7, 7') und die Aufrauelemente (9) orthogonal zu der Bewegungsrichtung der Kontaktschweißheizkomponente (2) unterbrochen ausgebildet sind.

6. Kontaktschweißheizkomponente nach einem der vorstehenden Ansprüche, **dadurch gekennzeichnet, dass** die Aufraueinrichtung (7, 7') und die Aufrauelemente (9) orthogonal zu der Bewegungsrichtung der Kontaktschweißheizkomponente (2) eine sich verändernde Höhe aufweisen.

7. Kontaktschweißheizkomponente nach Anspruch 6, **dadurch gekennzeichnet, dass** die Höhe der Aufraueinrichtung (7, 7') und der Aufrauelemente (9) orthogonal zu der Bewegungsrichtung der Kontaktschweißheizkomponente (2) von außen nach innen abnimmt.

8. Kontaktschweißheizkomponente nach einem der vorstehenden Ansprüche, **dadurch gekennzeichnet, dass** die Kontaktschweißheizkomponente (2) aus Metall besteht und ganz oder teilweise mittels eines 3D-Metalldruckverfahrens oder ganz oder teilweise mittels eines Laserinter- und/oder Laserschmelzverfahrens hergestellt ist.

9. Kontaktschweißheizkomponente nach einem der vorstehenden Ansprüche, **dadurch gekennzeichnet, dass** die Kontaktschweißheizkomponente (2) innen zwischen der Heizkomponentenoberseite (13) und der Heizkomponentenunterseite (13') eine Stützverstrebung zur Erhöhung der Druckfestigkeit aufweist.

10. Kontaktschweißheizkomponente nach einem der vorstehenden Ansprüche, **dadurch gekennzeichnet, dass** die Kontaktschweißheizkomponente (2) eine Heißluftschlitzschweißdüse (2') oder ein Elektroheizschweißkeil (2") ist.

11. Kontaktschweißheizkomponente nach Anspruch 10, **dadurch gekennzeichnet, dass** die Heißluftschlitzschweißdüse (2') eine Heißlufteintrittsöffnung (10), mindestens eine schlitzförmige Schweißluftaustrittsöffnung (11) und wenigstens eine der Schweißluftaustrittsöffnung (11) in einer Bewegungsrichtung der Heißluftschlitzschweißdüse (2') beim Schweißvorgang vorgelagerte Vorwärmluftaustrittsöffnung (12) für einen Heißluftstrahl aufweist, wobei sich die Aufraueinrichtung (7, 7') angrenzend an die Schweißluftaustrittsöffnung (11) quer zu der Bewegungsrichtung der Heißluftschlitzschweißdüse (2') erstreckt.

12. Kontaktschweißheizkomponente nach Anspruch 11, **dadurch gekennzeichnet, dass** sich die Aufrauelemente (9) von der Vorwärmluftaustrittsöffnung (12) bis hin zu der Schweißluftaustrittsöffnung (11) erstrecken.

13. Kontaktschweißheizkomponente nach Anspruch 10, **dadurch gekennzeichnet, dass** der Elektroheizschweißkeil (2") direkt oder indirekt elektrisch beheizt ist, wobei sich die Aufraueinrichtung (7, 7') angrenzend an die Heizkomponentenmaterialablaufkante (8) quer zu der Bewegungsrichtung des Elektroheizschweißkeils (2") erstreckt.

14. Schweißautomat (1) zum randseitigen Verbinden von zumindest teilweise überlappend angeordneten thermisch an-/aufschmelzbaren Materialbahnen, mit einer Kontaktschweißheizkomponente (2), die zum Plastifizieren der Materialbahnen zwischen einer überlappten unteren Materialbahn und einer überlappenden oberen Materialbahn einführbar und an diesen entlang bewegbar ist, **gekennzeichnet durch** eine Kontaktschweißheizkomponente (2) nach einem der vorstehenden Ansprüche.

## Claims

1. A contact welding heating component (2) for plasticizing the edges of thermally fusible/meltable material sheets disposed so as to overlap at least partially, which can be inserted between an overlapped lower material sheet and an overlapping upper material sheet and can be moved along the same, with a heating component upper side (13) for making contact with the upper material sheet and a heating component lower side (13') for making contact with the lower material sheet, with a heating component front-leading material side (14) in the direction of movement of the contact welding heating component (2) during the welding operation and a heating component rear trailing-material edge (8) for the material sheets, which are connected to one another by way of the heating component upper side (13) and the heating component lower side (13') forming a wedge-shaped contour, and with at least one roughening device (7, 7') for the material sheets protruding beyond the heating component upper side (13) and/or the heating component lower side (13'), that is disposed upstream of the heating component rear trailing-material edge (8) in the direction of movement of the contact welding heating component (2) and extends adjacent to the heating component rear trailing-material edge (8) transversely to the direction of movement of the contact welding heating component (2) and comprises a number of sharp-edged raised roughening elements (9) extending in the direction of movement of the contact welding heating component (2), **characterized in that** the roughening device (7, 7') and the roughening elements (9) have a variable height in the direction of movement of the contact welding heating component (2).

2. Contact welding heating component according to claim 1, **characterized in that** the roughening device (7, 7') and the roughening elements (9) have a maximum height in the direction of the heating component rear trailing-material edge (8).

3. Contact welding heating component according to any one of the preceding claims, **characterized in that** the roughening devices (7, 7') and the roughening elements (9) have an arcuate progression in the direction of movement of the contact welding heating component (2).

4. Contact welding heating component according to any one of the preceding claims, **characterized in that** the roughening device (7, 7') and the roughening elements (9) are interrupted in the direction of movement of the contact welding heating component (2).

5. Contact welding heating component according to any one of the preceding claims, **characterized in that** the roughening device (7, 7') and the roughening elements (9) are interrupted perpendicularly to the direction of movement of the contact welding heating component (2).

6. Contact welding heating component according to any one of the preceding claims, **characterized in that** the roughening device (7, 7') and the roughening elements (9) have a variable height perpendicularly to the direction of movement of the contact welding heating component (2).

7. Contact welding heating component according to claim 6, **characterized in that** the height of the roughening device (7, 7') and of the roughening elements (9) decreases from the outside to the inside perpendicularly to the direction of movement of the contact welding heating component (2).

8. Contact welding heating component according to any one of the preceding claims, **characterized in that** the contact welding heating component (2) is made of metal and produced entirely or partially by way of a 3D metal printing method or entirely or partially by way of a laser sintering and/or laser melting method.

9. Contact welding heating component according to any one of the preceding claims, **characterized in that** the contact welding heating component (2) comprises a supporting brace on the inside between the heating component upper side (13) and the heating component lower side (13') so as to increase the compressive strength.

10. Contact welding heating component according to any one of the preceding claims, **characterized in that** the contact welding heating component (2) is a hot-air-slot welding nozzle (2') or an electrical hot welding wedge (2").

11. Contact welding heating component according to claim 10, **characterized in that** the hot-air-slot welding nozzle (2') includes a hot air inlet opening (10), at least one slot-shaped welding air outlet opening (11) and at least one preheating air outlet opening (12) for a hot air stream which is disposed upstream of the welding air outlet opening (11) in a direction of movement of the hot-air-slot welding nozzle (2') during the welding operation, wherein the roughening device (7, 7') adjoins the welding air outlet opening (11) and extends transversely to the direction of movement of the hot-air-slot welding nozzle (2').

12. Contact welding heating component according to claim 11, **characterized in that** the roughening elements (9) extend from the preheating air outlet opening (12) to the welding air outlet opening (11).

13. Contact welding heating component according to claim 10, **characterized in that** the electrical hot welding wedge (2") is electrically heated directly or indirectly, wherein the roughening device (7, 7') adjoins the heating component rear trailing-material edge (8) and extends transversely to the direction of movement of the electrical hot welding wedge (2").

14. Automatic welding machine (1) for joining the edges of thermally fusible/meltable material sheets disposed so as to overlap at least partially, with a contact welding heating component (2), which can be inserted between an overlapped lower material sheet and an overlapping upper material sheet for plasticization of the material sheets and can be moved along the same, **characterized by** a contact welding heating component (2) according to any one of the preceding claims.

## Revendications

1. Composant chauffant (2) de soudage par contact, destiné à la plastification marginale de bandes de matériau aptes à amorcer/subir une fusion thermique et agencées au moins partiellement avec chevauchement, pouvant être inséré entre une bande de matériau inférieure chevauchée et une bande de matériau supérieure chevauchante, et pouvant être mû le long de ces dernières, comprenant une face supérieure (13) conçue pour entrer en contact avec ladite bande de matériau supérieure, et une face inférieure (13') conçue pour entrer en contact avec ladite bande de matériau inférieure ; une face (14) d'arrivée du matériau, antérieure dans la direction de mouvement dudit composant chauffant (2) de soudage par contact au cours du processus de soudage, et un bord postérieur (8) de décharge dudit matériau, dédié aux bandes de matériau qui sont reliées mutuellement par l'intermédiaire de la face supérieure (13) du composant chauffant et de la face inférieure (13') dudit composant chauffant, avec formation d'un profil cunéiforme ; et au moins un dispositif (7, 7') générateur de rugosité qui est dévolu auxdites bandes de matériau, fait saillie au-delà de ladite face supérieure (13) du composant chauffant et/ou de ladite face inférieure (13') dudit composant chauffant, est situé avant le bord (8) de décharge du matériau dans la direction de mouvement dudit composant chauffant (2) de soudage par contact, s'étend à proximité immédiate dudit bord (8) de décharge du matériau, transversalement par rapport à ladite direction de mouvement dudit composant chauffant (2) de soudage par contact, et est muni d'un certain nombre d'éléments protubérants (9) générateurs de rugosité, dotés d'une réalisation à arêtes vives et s'étendant dans ladite direction de mouvement dudit composant chauffant (2) de soudage par contact, **caractérisé par le fait que** le dispositif (7, 7') générateur de rugosité et les éléments (9) générateurs de rugosité présentent une hauteur variable dans la direction de mouvement du composant chauffant (2) de soudage par contact.

2. Composant chauffant de soudage par contact, selon la revendication 1, **caractérisé par le fait que** le dispositif (7, 7') générateur de rugosité et les éléments (9) générateurs de rugosité présentent une hauteur maximale dans la direction du bord (8) de décharge de matériau dudit composant chauffant.

3. Composant chauffant de soudage par contact, selon l'une des revendications précédentes, **caractérisé par le fait que** les dispositifs (7, 7') générateurs de rugosité et les éléments (9) générateurs de rugosité présentent un tracé curviligne dans la direction de mouvement dudit composant chauffant (2) de soudage par contact.

4. Composant chauffant de soudage par contact, selon l'une des revendications précédentes, **caractérisé par le fait que** le dispositif (7, 7') générateur de rugosité et les éléments (9) générateurs de rugosité sont de réalisation discontinue dans la direction de mouvement dudit composant chauffant (2) de soudage par contact.

5. Composant chauffant de soudage par contact, selon l'une des revendications précédentes, **caractérisé par le fait que** le dispositif (7, 7') générateur de rugosité et les éléments (9) générateurs de rugosité sont de réalisation discontinue orthogonalement par rapport à la direction de mouvement dudit composant chauffant (2) de soudage par contact.

6. Composant chauffant de soudage par contact, selon l'une des revendications précédentes, **caractérisé par le fait que** le dispositif (7, 7') générateur de rugosité et les éléments (9) générateurs de rugosité présentent une hauteur variable orthogonalement par rapport à la direction de mouvement dudit composant chauffant (2) de soudage par contact.

7. Composant chauffant de soudage par contact, selon la revendication 6, **caractérisé par le fait que** la hauteur du dispositif (7, 7') générateur de rugosité et des éléments (9) générateurs de rugosité décroît, de l'extérieur vers l'intérieur, orthogonalement par rapport à la direction de mouvement dudit composant chauffant (2) de soudage par contact.

8. Composant chauffant de soudage par contact, selon l'une des revendications précédentes, **caractérisé par le fait que** ledit composant chauffant (2) de soudage par contact consiste en du métal et est fabriqué, totalement ou en partie, au moyen d'un procédé d'impression de métal en 3D ou bien, totalement ou en partie, au moyen d'un procédé de frittage au laser et/ou de fusion par laser.

9. Composant chauffant de soudage par contact, selon l'une des revendications précédentes, **caractérisé par le fait que** ledit composant chauffant (2) de soudage par contact est intérieurement pourvu, entre la face supérieure (13) dudit composant chauffant et la face inférieure (13') dudit composant chauffant, d'un entretoisement d'appui conçu pour accroître la résistance à la pression.

10. Composant chauffant de soudage par contact, selon l'une des revendications précédentes, **caractérisé par le fait que** ledit composant chauffant (2) de soudage par contact est une buse fendue (2') de soudage par air chaud, ou un coin chauffant de soudage électrique (2").

11. Composant chauffant de soudage par contact, selon la revendication 10, **caractérisé par le fait que** la buse fendue (2') de soudage par air chaud comprend un orifice (10) d'entrée d'air chaud, au moins un orifice (11) de sortie d'air de soudage, en forme de fente, et au moins un orifice (12) de sortie d'air de préchauffage, destiné à un jet d'air chaud et situé en amont dudit orifice (11) de sortie d'air de soudage dans une direction de mouvement de ladite buse fendue (2') de soudage par air chaud, au cours du processus de soudage, le dispositif (7, 7') générateur de rugosité s'étendant à proximité immédiate dudit orifice (11) de sortie d'air de soudage, transversalement par rapport à ladite direction de mouvement de ladite buse fendue (2') de soudage par air chaud.

12. Composant chauffant de soudage par contact, selon la revendication 11, **caractérisé par le fait que** les éléments (9) générateurs de rugosité s'étendent jusqu'à l'orifice (11) de sortie d'air de soudage à partir de l'orifice (12) de sortie d'air de préchauffage.

13. Composant chauffant de soudage par contact, selon la revendication 10, **caractérisé par le fait que** le coin chauffant de soudage électrique (2") est chauffé électriquement en mode direct ou indirect, le dispositif (7, 7') générateur de rugosité s'étendant à proximité immédiate du bord (8) de décharge de matériau dudit composant chauffant (2), transversalement par rapport à la direction de mouvement dudit coin chauffant de soudage électrique (2").

14. Machine (1) de soudage automatique, affectée à la liaison marginale de bandes de matériau aptes à amorcer/subir une fusion thermique et agencées au moins partiellement avec chevauchement, équipée d'un composant chauffant (2) de soudage par contact qui, en vue de la plastification desdites bandes de matériau, peut être inséré entre une bande de matériau inférieure chevauchée et une bande de matériau supérieure chevauchante, et peut être mû le long de ces dernières, **caractérisée par** un composant chauffant (2) de soudage par contact conforme à l'une des revendications précédentes.
